Europäisches Patentamt

European Patent Office

Office européen des brevets

(19)

(11) Publication number: **0 150 521**
**A2**

# (12) EUROPEAN PATENT APPLICATION

(21) Application number: **84201481.3**

(22) Date of filing: **27.04.81**

(51) Int. Cl.⁴: **G 06 F 9/46**

(30) Priority: **25.04.80 US 143982**

(43) Date of publication of application: **07.08.85**
**Bulletin 85/32**

(84) Designated Contracting States: **CH DE FR GB IT LI NL SE**

(60) Publication number of the earlier application in accordance with Art. 76 EPC: **0039227**

(71) Applicant: **DATA GENERAL CORPORATION, Route 9, Westboro Massachusetts 01581 (US)**

(72) Inventor: **Alsing, Carl J., 35 Front Street, Hopkington Massachusetts 01748 (US)**
Inventor: **Holland, Charles J., 61 Maple Lane, Northboro Massachusetts 01531 (US)**
Inventor: **Wallach, Steven, 5 Lomes Circle, Framingham Massachusetts 01730 (US)**

(74) Representative: **Pears, David Ashley et al, REDDIE & GROSE 16 Theobalds Road, London WC1X 8PL (GB)**

(54) **Data processing system with improved interrupt handling.**

(57) Certain device interrupts, distinguished at XVCT interrupts, are handled using four regions on main memory. The interrupt code is held in two locations (LOC 1, 2) in the first region and the code in the first location (LOC 1) enables an XVCT interrupt to be recognised. The contents of the second location (LOC 2) are then used as a displacement to point to a location in the second region which is an XVCT table with an entry for each interrupting device. These entries in turn point to areas within the third region, a device control table (DCT). Each such area contains firstly a pointer to the interrupt routine (in the fourth memory region) for the device in question, secondly a MASKcode which identifies the other devices which are prevented from interrupting while the device in question is serviced and a processor status register word (PSR) which determines whether or not a fixed point overflow condition is to be enabled. Execution of the selected interrupt routine is preceded by a conventional stack save (PUSH) operation and followed by a restore (POP) operation.

0150521

- 1 -

## DATA PROCESSING SYSTEM

This invention relates generally to a data processing system capable of use with one or more external devices.

This application is one of four divisional applications all divided out of our parent application 81301836.3. The numbers and publication numbers of the other three divisional applications are as follows:

The parent application was published under the number 0 039 227 and reference should be made to that publication for a complete description of the whole system.

The object of the invention is to enhance the ability of the system to handle a plurality of external devices.

The invention is defined in the characterising part of claim 1 and further features and aspects of the invention are defined in the further claims.

- 3 -

The invention will be described in more detail, by way of example, with reference to the accompanying drawings, in which:

Figure 1 shows a block diagram of the overall data processing system of the invention;

Figures 2 and 3 are diagrams explaining address translation operations;

Figures 4 to 6 show block diagrams which represent the address translation unit of the system of Figure 1;

Figure 7 shows a diagrammatic representation of certain memory locations used to explain the operation of a particular macro-instruction used in the system of Figure 1; and

Figure 8 shows a diagrammatic representation of certain operations performed in the macro-instruction discussed with reference to Figure 7.

General Description

Before describing a specific implementation of the system of the invention, it is helpful to discuss the overall concept thereof in more general terms so that the characteristics that are desired can be described and the description of a particular implementation can be better understood.

A significant aspect of the system of the invention, as discussed above, is the size of the logical address space which is available. For purposes of convenience in distinguishing between the previous NOVA and Eclipse systems, the extended system as discussed herein will sometimes be referred to as the "Eagle" system. In the Eagle system, for example, the logical address space can be as high as 4 gigabytes (more accurately the prefix "giga" is 1,073,741,824, or $2^{30}$, so that 4 gigabytes is, more accurately, 4,294,967,296) where a byte is defined as having 8 bits of precision. As used hereinafter, a "word" is defined as having 16 bits of precision (i.e. equivalent to 2 bytes) and a "double-word" as having 32 bits of precision (equal to two words, or four bytes). Because of the increased logical address space the overall system is able to support an instruction set which is larger than that supported by a Nova system or an Eclipse system having, for example, a much smaller logical address space. The overall capability of the system can be best understood by those in the art by examination of the set of the extended instructions which are capable of being performed by the system. The complete instruction set for the computer described herein is set forth in the last publication listed in Appendix A and available from Data General Corporation. The particular instructions which are of interest to the subject matter of the invention are set forth in Appendix B incorporated as a part of this specification. Such instruction set includes the extended instruction set (which can be referred to as the Eagle instruction set) and the Eclipse C-350 instruction set, as well as the Nova instruction set, all of which are capable of being handled by the system, the latter two instruction sets being already disclosed as part of the above publications. All Nova and Eclipse instructions are executed according to the principles and specifications presented in the above-referenced publications.

The binary encodings of the extended instructions which are supported by the system of the invention are shown in Appendix B. A significant difference exists between the systems having extended instructions in accordance with the invention and systems having extended instructions which have been suggested by others. In any system in which an extended instruction set effectively represents a "super" set of a previous, or original, set of instructions, all of the instructions must be suitably decoded for machine operations. Normally, such systems utilize a decoding sub-system for decoding both the original instruction set and for decoding the extended instruction set. The decoder operates so as to permit the decoding of only one of the instruction sets at a time, the original instruction set and the extended instruction set being in effect, mutually exclusive. In order to determine which instruction is to be decoded, a unique instruction must be used to set a "mode bit", i.e., a single bit which in one state indicates that the original instruction set is to be decoded and in the other state indicates that the extended instruction set is to be decoded. However, in neither case can the decoding subsystem be made available to decode either of the both sets simultaneously. Such approach inserts a limitation on the overall machine operation since it is never possible to simultaneously decode instructions from different instruction sets of an overall super set thereof.

The system of the invention, however, avoids such mutual exclusivity and is arranged to be capable of decoding instructions from either set or both sets at any one time. A decoder PROM (programmable read-only-memory) system is utilized for decoding both the extended Eagle instruction set and the original or basic instruction sets as, for example, the original Nova and Eclipse instruction set. Each instruction to be decoded includes the information which determines which decoder is to be utilized, such determination thereby being inherently carried in each instruction word which is to be decoded. As seen in Appendix B, for example, the information is contained in bits $\emptyset$ and 12-15. Thus, in the extended Eagle instruction set, bit $\emptyset$ is always a "1" while bits 12-15 are always "1001" for all instructions of the extended instruction set except for those extended instructions which use a "1" in bit $\emptyset$ and the encoding "011000" in bits 10-15 and a "1" in bit "0", a "0" in bit 5, and the encoding "111000" in bits 10-15. On the other hand, the original Eclipse instructions are such that bit $\emptyset$ is 0 and bits 12-15 are "1000". Further, in cases where the instruction does not carry either the Eagle coded bits or the Eclipse coded bits, such instruction is interpreted as a NOVA instruction.

Because each instruction carries with it an identification as to which instruction set the instruction belongs, the system operates to decode instructions on a non-mutually exclusive basis.

In order to support the extended operations of the system, the configuration thereof requires an augmentation of the registers which were previously available in the original system of which the new system is an extension. The following registers are utilized in the system and are discussed in more detail later with respect to the particular implementation described in connection with specific figures below.

The register set includes fixed point registers, floating point registers, stack management registers and memory management registers.

Fixed Point Registers

The system includes four fixed point accumulators (ACC $\mathcal{G}$-3), one program counter (PC) and one processor status register (PSR). Each of the accumulators has 32 bit precision which can accomodate (1) a 16 bit operand which can be sign extended to 32 bits; (2) a 15 bit address which can be zero extended to 28 bits, the higher order 3 bits of the program counter being appended thereto together with a zero bit, all of which can be appended for storage in the accumulator; or (3) an 8 bit byte which can be zero extended to 32 bits before storage in the accumulator.

The program counter has 31 bits of precision, bits 1-3 identifying one of 8 current memory rings (discussed in more detail below) and bits 4-31 of which accomodate an address offset for instruction addresses. For Eclipse operation, for

- 9 -    0150521

example, which normally requires only a 15 bit program counter, the bits 1-3 identify the current memory ring as in a 31 bit extended operation while the 15 least significant bits 17-31 represent the 15 bit Eclipse program counter and bits 4-16 are all zeros.

The processor status register is a 16 bit register which provides an overflow mask bit which if set will result in a fixed point overflow. Additionally the register includes a fixed point overflow indicator bit and a bit which indicates that a micro interrupt has occurred. Other bits in the register are reserved and are thus available for potential future use.

Floating Point Registers

The system includes four floating point accumulators (FPAC $\emptyset$-3) and one floating point status register (FPSR). Each of the floating point accumulators contains 64 bits of precision which is sufficient to wholly contain a double precision floating point value. The floating point registers of the extended system are identical to the Eclipse floating point accumulators (FPAC) which are discussed in the aforementioned publications.

The floating point status register also has 64 bits of precision, 32 bits of which act as the floating point program counter. In the event of a floating point fault the floating point program counter bits define the address of the floating point instruction that caused the fault. Four other bits are utilized, respectively, to indicate an exponent overflow condition, an exponent underflow condition,

0150521

a divide-by-zero condition and a mantissa overflow condition. Another counter bit will result in a floating point fault if any of the above latter four bits are also set. The floating point counter also includes a zero bit and negative bit, as are generally used in status registers, as well as bits for indicating a floating point rounding mode of operation and an interrupt resume operations.

## Stack Management Registers

The system of the invention utilizes four 32 bit registers to manage the memory stack, which registers include a stack pointer, a stack limit, a stack base, and a frame pointer. The stack pointer register references the double word entry at the top of the stack. When a "push" operation occurs, all the bits of the stack pointer are incremented by 2 and the "pushed" object is placed in the double word addressed by the new value of the stack pointer. In a "pop" operation the double word addressed by the current value of the stack pointer is placed in a designated register and all 32 bits of the stack pointer are then decremented by 2.

The frame pointer register references the first available double word minus two in the current frame. The stack limit contains an address that is used to determine stack overflow. After any stack operation pushes objects onto the stack, the stack pointer is compared to the stack limit. If the stack pointer is greater than the stack limit a stack fault is signaled. The stack base contains an address that is used to determine the stack underflow. After any stack operation that pops objects from the stack, the stack pointer is compared to the stack base. If the stack pointer is less than the stack base a stack fault is signaled.

## Memory Management Registers

Eight registers are used to manage memory, such registers each being designated as a segment base register (SBR) having 32 bits of precision, the memory being divided into eight segments, or rings, thereof. The SBR's in the system described herein are formed as part of scratch pad registers on an address translation unit (ATU) of the system, as discussed in more detail below. One bit of each SBR indicates whether or not the segment associated therewith can be referenced (i.e. is there a valid or an invalid reference to such segment). Another bit indicates the maximum length of the segment offset field i.e. whether or not the reference is a one level page table or a two level page table, as explained in more detail below. A third bit of each segment base register indicates whether a Nova/Eclipse instruction for loading an effective address of a Nova/Eclipse I/0 instruction is being executed. Another bit represents a "protection" bit which indicates whether or not an I/0 instruction can be executed or whether the execution thereof would be a violation of the protection granted to such segment. Nineteen of the bits contain a physical address which identifies the physical address in the memory of the indicated page table. Discussions of the addressing of page tables in the memory are presented in more detail below including a discussion of the memory locations in each segment.

Overall System

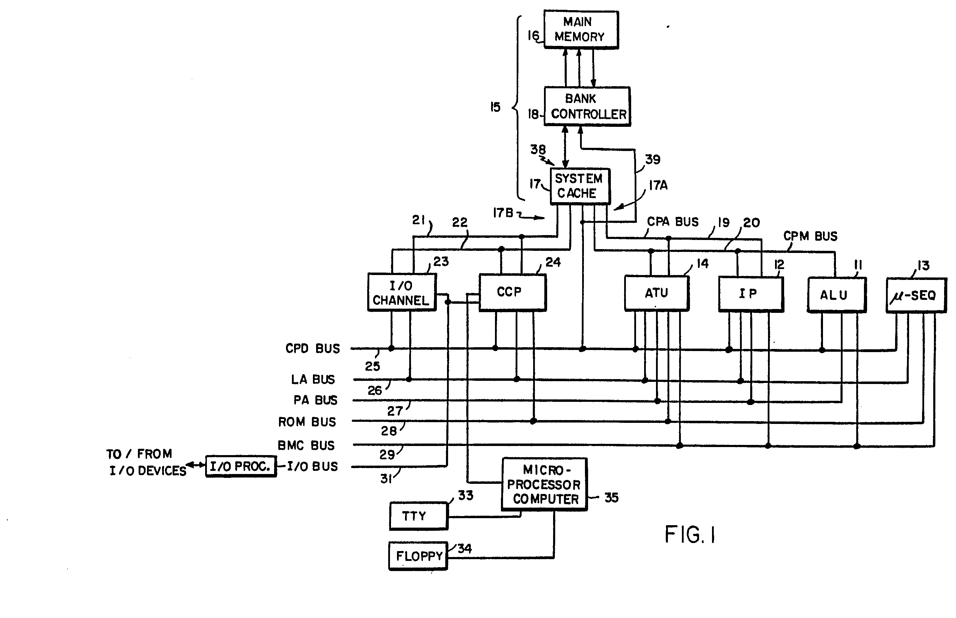

A block diagram of a preferred embodiment of the invention is shown in FIG. 1. The central processor portion of the system comprises an arithmetic logic unit (ALU) 11, an instruction processor unit 12, a micro-sequencer unit 13 and an address translation unit (ATU) 14. The memory system includes a main memory unit 16, an auxiliary cache memory unit 17 and a memory control unit identified as bank controller unit 18. A central processor address bus 19 permits the transfer of addresses among the instruction processor unit 12, the address translation unit 14 and the memory system. A control processor memory (CPM) bus 20 permits the transfer of instructions and operands among arithmetic logic unit 11, instruction processor unit 12, address translation unit 14 and the memory system 15.

I/O address bus 21 and I/O memory/data bus 22 permit the transfers of addresses and data respectively with respect to I/O devices via I/O channel unit 23, as well as the transfers thereof between the memory system and a console control processor unit 24. Suitable control buses for the transfer of control signals among the various units of the overall system are provided as buses 25-31 described in more detail below. Appropriate teletype and floppy disc systems 33 and 34, respectively, can be utilized with the system, particularly in the diagnostics mode of operation via console control processor unit 24 by way of a suitable micro processor computer 35.

The inventive aspects of the system to be described herein require a more detailed discussion of the memory system, the address translation unit, the instruction processor unit and the micro sequencer unit. The arithmetic logic unit, the console control processor unit and the I/O channel unit with their associated controls need not be described in detail.

## Memory System

In accordance with a preferred embodiment of the invention the memory system comprises up to two megabytes of main memory 16 and, if desired, the system can be expanded even further as, for example, to 4 megabytes. It should be noted that sufficient bits are reserved in the physical address fields so as to allow for system expansion to one billion bytes of memory. The interface between the main memory unit 16 and the remainder of the system is via the dual port cache memory unit 17, data being transferred between the main memory and the cache memory unit in blocks of 16 bytes. The cache memory unit herein will usually be referred to as the "system cache" (SYS CACHE) to distinguish it from a separate cache memory in the instruction processor unit which latter memory will normally be referred to as the "instruction cache" (I CACHE) unit. The system cache unit 17 services CPU requests for data transfers on port 17A of its two ports and services requests from the I/O system at port 17B thereof. CPU data transfers can include "byte-aligned-byte" transfers, "word-aligned-word- transfers, and double word transfers. I/O data transfers can include "word-aligned-word" transfers, "double word-aligned-double word" transfers and 16 byte block transfers.

The main memory unit 16 can include from one to eight 256-kilobyte memory modules. Each memory module contains a memory array of 156 16 K dynamic random access

ADDRESS TRANSLATION UNIT

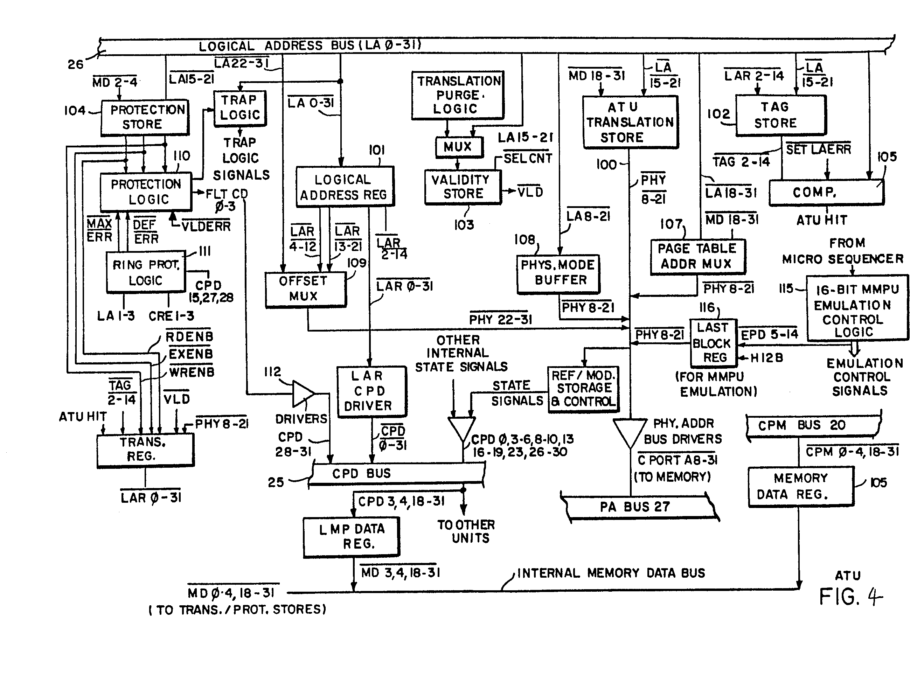

The address translation unit (ATU) 14 is shown broadly in FIGS. 4 to 6, the primary function of such unit being to translate a user's logical address (LA) into a corresponding physical address (PA) in the physical address space of the processor's memory modules discussed above. Such translation is effectively performed in two ways, one, by accessing a page from the system cache or from main memory at the particular page table entry specified in a field of the logical address and placing the accessed page in a translation store unit for use in performing the address translation, a sequence of operations normally designated as a Long Address Translation (LAT) and, the other, by accessing additional references to a page that has already been selected for access after an LAT has been performed and the page selected by the LAT is already present in the translation store. The latter translation provides an accelerated address reference and can be accomplished by saving, at the end of every Long Address Translation, the address of the physical page which has been accessed. As mentioned, the physical page involved is stored in a high speed random access memory (RAM) file designated in FIG. 4 at ATU translation store 100.

Translations of addresses on the physical page which is stored in the ATU translation store 100 are available to the processor within one operating time cycle of the CPU, while normally the Long Address Translation will take a plurality of such cycles for a reference which requires a single level page table reference (e.g. 3 cycles) or a two-level page table reference (e.g. 5 cycles), where the page in question is available in the system cache memory. Even longer times may be required if the page involved can not be found in the system cache memory and must be accessed from main memory.

A secondary function of the ATU is to emulate all operations of the previous system of which the present system is an extension, e.g., in the system described, to perform all Eclipse memory management processor unit (MMPU1) address translation operations, as described in the above referenced publication for such systems, in an efficient and compatible way, such emulated operations being described in more detail later.

In order to understand more clearly the translation of a logical word address (a byte address when shifted right by one position produces a word address), the logical word address can be defined as shown below:

| 0 | 1 | 3 | 4 | 21 | 22 | 31 |
|---|---|---|---|----|----|----|
| X | SEGMENT | | LOGICAL PAGE ADDRESS | | OFFSET | |

| 1 | | 15 | 21 |
|---|---|----|----|
|  | ← INDEX → | | |

| 2 | 14 |
|---|----|
| TAG | |

As seen therein, the segment and logical page address is 21 bits long, the segment and logical page address being divided into two fields, the Tag field and the Index field. The Tag field is defined as bits $\overline{LA\ 2-14}$ while the Index field is defined as bit $\overline{LA\ 1}$ plus bits $\overline{LA\ 15-21}$.

As seen in FIG. 79, when a logical word address $\overline{LA\emptyset-31}$ is received from the arithmetic logic unit (ALU) on the logical address bus 26 it is latched into a logical address register $\overline{(LAR)\ 101}$. The Index bits $\overline{LA\ 15-21}$ are taken directly from the logical address bus to address four RAM stores, the first being a Tag store 102, which retains the tag portions of the logical addresses corresponding to the physical addresses saved in the ATU physical address (PA) translation store 100. The Index bits LA 15-21 are also supplied to a validity store RAM unit 103 and to a protection store RAM unit 104, as discussed below.

If the physical address translation store 100 contains valid address translations, when a memory access is started the logical address is loaded into the logical address register 101 and the Index (bits LA 15-21) is used to select a location in the store.

In the particular system described, even though there is a valid address translation at such location in translation store 100, it may not be the correct one. Corresponding with each index of the logical addresses (and each address location in the translation store) there are a selected number of possible "tags", each tag corresponding to a unique physical page address. Only one of such tags and its corresponding physical page address can be saved in the translation store 100 at the location selected by the Index. Therefore the "tag" (TAG 2-14) that corresponds to the Index in question and is currently stored in the tag store 102 is compared at comparator 105 to the "tag" in the logical address register (LA 2-14). If the "tags" correspond, the address translation contained in the translation store 100 is the correct one and can be used to supply the desired physical address (signified by an ATU HIT signal at the output of comparator 105). If they do not match, a Long Address Translation operation must be performed to obtain the desired physical page address from the system cache or main memory. The physical page address which is thereby accessed by such LAT procedure to replace the physical page address previously contained in the ATU translation store 100 is placed on the appropriate transfer bus (CPM bus 20). At the completion of the long address translation, the "tag" taken from the logical address register ($\overline{LAR\ 2-14}$) is written into the tag store 102 at the location selected by the index and the physical page address from the memory data register 106 (MD 18-31) is written into the translation store 100 at the location specified by the index.

The ATU configuration shown in FIG. 4 also contains further components which are used to place the translated physical address of a desired physical page table on the physical page address (PA) bus 27. There are three other possible sources of physical page table addresses, the first of which is bits SBR 18-31 of a segment base register which segment base register can also be located in scratch pad units of the address translation unit. This address is used to reference either a high order page table (HOPT) of a two-level page table or the low order page table (LOPT) of a one-level page table. Since the segment base registers are located at the ATU, such addres can be obtained from the logical address bus 26 as $\overline{LA\ 18-31}$.

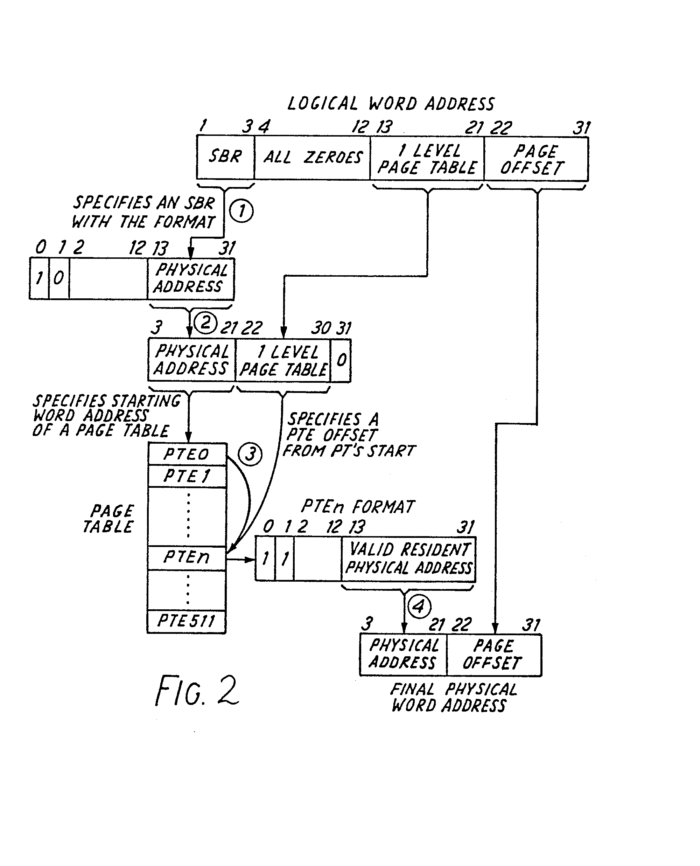

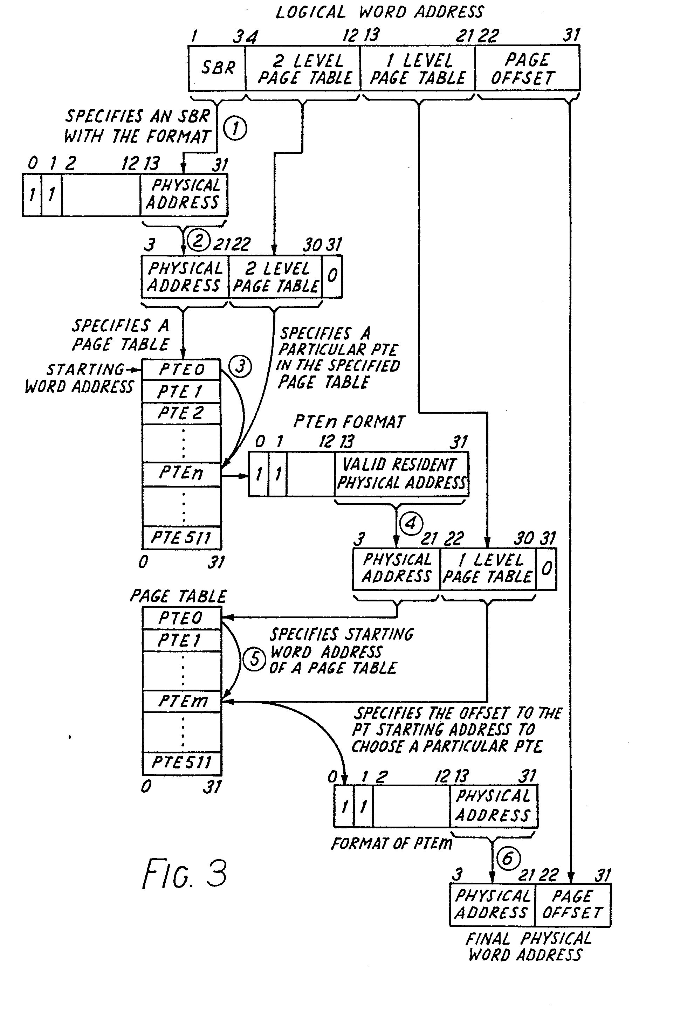

The following diagrams depict the results of the control actions initiated by the arithmetic translation unit (ATU) to perform a long address translation in which a physical address is derived from a logical address by traversing the one-and two-level page tables in the main memory. Fig 2. depicts a one-level page table traversal, while Fig 3 depicts a two-level page table traversal, the physical address bits 3-21 of the final physical address (i.e., the desired memory allocation data) being placed in the translation store 100 so that when the corresponding logical address is subsequently requires a translation, the physical address is available (an ATU HIT occurs) and there is no need for subsequent long address translation.

The logical word address to be translated for a one-level page table translation has the format shown in Fig 2. Bits 1-3 of the word address specify one of the eight segment base registers (SBRs). The ATU uses the contents of this valid SBR to form the physical address of a page table entry(PTE), as shown at point (1) of Fig 2.

The selected SBR contains a bit (bit 1) which specifies whether the page table traversal is a one-level (bit 1 is zero) or a two-level (bit 1 is a one) page table. In Fig 2 a page table entry address comprising the starting address of a selected page table and page table entry offset specifying a page address therein.

To form this physical page address, the ATU begins with the physical address as shown at (2) of Fig 2. this address becomes bits 3-21 of the PTE address. Bits 13-21 of the logical word address become bits 22-30 of the PTE address. The ATU appends a zero to the right of the PTE address, making a 29-bit word address.

Bits 3-21 of the PTE address (unchanged in the step above) specify the starting address of a page table. Bits 22-31 of the PTE address specify an offset from the start of the table to some PTE (labelled PTEn in Fig 2). This PTE specifies the starting address of a page of memory, as shown at (3) of Fig 2.

PTEn bits 13-31, the page address, becomes bits 3-21 of the physical address, as shown at (2) of Fig 2. The page offset field specified in bits 22-31 of the logical word address becomes bits 22-31 of the physical address. This is the physical word address translated from the original word address. The physical address bits 3-21 are placed in the translation store as the memory allocation data for subsequent use if the same logical word address requires subsequent translation. It should be noted that when using a one-level page table, bits 4-12 of the logical word address must be zero. If they are not zero and bit 1 of the SBR indicates a one-level page table is required, a page fault occurs.

Just as in the one-level page table translation process, in the two-level page table translation depicted in Fig 3, the processor produces a physical address. The logical word address to be translated has the format shown in the diagram, the steps (1) to (4) being substantially the same as in

Fig  except that bits 4-12 of the logical word address become bits 22-30 of the PTE address. The ATU appends a zero to the right of the PTE address, making a 29-bit word address. Bits 1-3 of the word address specify one of the eight segment base registers (SBRs).

Bits 3-21 of the PTE address specify the starting address of a page table. Bits 22-31 of the PTE address specify an offset from the start of the table to some PTE (labelled PTEn). The PTE specifies the starting address of a page table. Thus, the ATU now constructs the address of a second PTE from the address at (4). The physical address specified in bits 13-31 of the first (PTEn) becomes bits 3-21 of the address of the second PTEm. Bits 13-21 of the logical word address become bits 22-30 of the second PTE's address. The ATU appends a zero to the right of the second PTE address to make a 29-bit word address.

Bits 3-21 of the second PTE address specify the starting address of a second page table. Bits 22-31 of the second PTE address specify an offset from the start of the second table to some PTE (labelled PTEm in Fig 3. The second PTE specifies the starting address of a page, as shown at (5) in Fig 3.

The second PTEm's bits 13-31, the page address, become bits 3-21 of the physical address and the page offset specified in bits 22-31 of the logical word address becomes bits 22-31 of the physical address, as shown at (6) in Fig 3. This last value is the final physical word address.

The physical page table address for the low order page table of a two-level page table is in bits 18-31 of the high order page table entry (HOPTE) which must be fetched from the main memory.  Thus, the second possible source of the physical page table address is the memory data register (MD) 105 which holds the data that arrives on the physical memory data (CPM) bus 20 as $\overline{MD\ 18\text{-}31}$.  A suitable page table multiplexer 107 is used to select which of the two sources will drive the physical address bus when its outputs are enabled.

The third and final source is to drive the physical page address bus 27 directly through a physical mode buffer 108, such buffer being used to address physical memory directly ($\overline{PHY\ 8\text{-}21}$) from buts $\overline{LA\ 8\text{-}21}$ of the logical address bus.  Such buffer is enabled while the ATU unit is turned off (i.e., no address translation is required) since the physical address in that mode is the same as the logical address and no translation is necessary.

Bits $\overline{PHY\ 22\text{-}31}$ of the physical address are offset by displacement bits, there being three possible origins for the offset.  The first source of such offset is from bits $\overline{LA\ 22\text{-}31}$ of the logical address bus which bits are used while in physical mode (no address translation is necessary) as well as the offset in the object page.  The second source of the offset is bits $\overline{LAR\ 4\text{-}12}$ (referred to as two-level page table bits in Fig 3 above) of the logical address register which is used as an offset within the high order page table during a long address translation. Since this source is only nine bits long and page table entries are double words aligned on even word boundaries, a ten bit offset (to form $\overline{PHY\ 22\text{-}31}$) is constructed by appending a zero bit to the least significant bit.  The final source for the offset is

bits L̄ĀR̄ 1̄3̄-2̄1̄ (referred to as one-level page table bits in

Fig 3    above) of the logical address register which is used as an offset within the low order page table during a long address translation.  A zero bit is appended to the least significant bit of this source also.  Offset multiplexer 109 is used to select the desired one of such three offset sources.

The following discussion summarizes the address bit sources for forming a low order or high order page table entry address in main memory in making a long address translation.

The address of the page table entry is formed from address fields in a segment base register (SBR) and from address fields in the logical address register.  The address fields of a segment base register can be depicted as follows:

| 0 | 1 | 2 | 3 | 4 | 12 | 13 | 31 |
|---|---|---|---|---|---|---|---|
| V | L | LEF | I/O | RESERVED | | PHYSICAL ADDRESS | |

SEGMENT BASE REGISTER

Depending on whether a one-level (low order) or a two-level (high order) page table entry is called for, the SBR address field comprising bits 4-12 or the SBR address field comprising bits 13-21 is transferred to the memory data register 106 to form the higher order bits of the page table entry.  As mentioned above, the eight SBR registers are located in 8 of the 256 locations of scratch pad registers on the ATU.  This use of such scratch pad locations for the segment base registers can be contrasted with prior known systems wherein the segment base register (or registers comparable thereto) in a segment, or ring, protection memory system are all located at specified locations in the main memory.  By placing them in a scratch-pad memory located in a processing unit of the system, as in the ATU unit here, the higher order page table entry bits are acquired more rapidly than they would be if it were necessary to fetch them from main memory and, hence, the speed at which page table entries can be made is improved considerably.

One of the bits of an SBR (identified above as "V" bit) is examined to determine whether the SBR contents are valid. Another bit (identified above as "L" bit) is examined to determine whether a 1-level or a 2-level page table entry is required so that the correct field is supplied to the memory data register.

Other bit  fields of the SBR are used to determine whether a Load Effective Address (LEF) instruction (such LEF instruction is part of the Eclipse instruction set as explained more fully in the above cited publications therein) or I/O instruction is required.  Thus in a selected state the LEF Enable bit will enable an LEF instruction while a selected state of the I/O Protect bit will determine whether an I/O instruction can be permitted.  The remaining field of the SBR contains the address offset bits.

As is also seen in FIG. 4 a variety of protection checks are made for each reference to memory, which protection checks are made by the use of protection store unit 104, protection logic unit 110 and ring protection logic unit 111 for providing appropriate fault code bits $\overline{(FLTCD\ \emptyset-3)}$ which are supplied to the micro-sequencer (described below) via driver 112 on to the CPD bus 25 for initiating appropriate fault micro-code routines depending on which fault has occured.

The following six protection checks can be made:

1.  Validity storage protection

2.  Read protection

3.  Write protection

4.  Execute protection

5.  Defer protection

6.  Ring maximization protection

A validity storage protection check determines whether the corresponding block of memory to which a memory reference is made has been allocated and is accessible to the current user of the system. The validity storage field is a one-bit field which is located, for example, at bit zero of each of the segment base registers (located on an ATU board as discussed above) or at bit zero in each of the high order page table entry addresses and low order page table entry addresses. In a particular embodiment, for example, a "1" indicates that the corresponding block has been so allocated and is accessible whereas a "0" indicates that the user cannot use such a memory block.

Generally when a new user enters the system all pages and segments in the logical address space which are allocated to that user, except those containing the operating system, are marked invalid. Validity bits are then set valid as the system begins allocating logical memory to such new user. If a user makes a memory reference to an invalid page, an invalid page table, or an invalid segment, the memory reference is aborted and a validity storage protection error is then signaled by the fault code bits on the CPD bus.

The read protection field is a one-bit field normally located at a selected bit (bit 2, for example) in each of the low order page table entry addresses and a check thereof determines whether the corresponding object page can or cannot be read by the current user. If the page cannot be read, a read error is signaled by the fault code bits on the CPD bus. In a similar manner a check of the write protection error field determines whether the corresponding object page can be written into by the current user, an appropriate write error being signaled by the fault code bits if the user attempts to write into a page to which he is not allowed.

The execute protection field is a one-bit field which is located at a selected bit (e.g. bit 4) in each of the low order page table entry addresses and a check thereof determines whether instructions from a corresponding object page can or cannot be executed by the current user. If such an instruction fetch is not allowed, an execute error is signaled by the fault code bits on the CPD bus. Execute protection is normally checked only during the first fetch within a page and any additional instruction fetches are performed using the physical page address from the first fetch, which for such purpose is retained by the instruction processor.

When a user is attempting to reference a location in memory and is utilizing a chain of indirect addresses to do so, the system will abort the operation if a chain of more than a selected number of said indirect addresses is encountered. For example, in the system under discussion if a chain of more than sixteen indirect addresses is encountered the operation is appropriately aborted and a defer error is signaled by the fault code bits on the CPD bus. Such protection is utilized, for example, normally when the system has performed a loop operation and the system, because of a fault in the operation thereof, continues to repeat the indirect loop addressing process without being able to break free from the loop operation.

Ring maximization protection is utilized when the user is attempting to reference a logical location in memory in a lower ring (segment) than the current ring of execution (CRE 1-3). Since such operation is not permitted by the system, the operation must be aborted if the user attempts to reference a lower ring than currently being used and a ring maximization error is signaled on the CPD bus. Since the logical address space is divided into eight rings, or segments, a ring which the user desires to reference can be indicated by bits 1-3, for example, of the logical address.

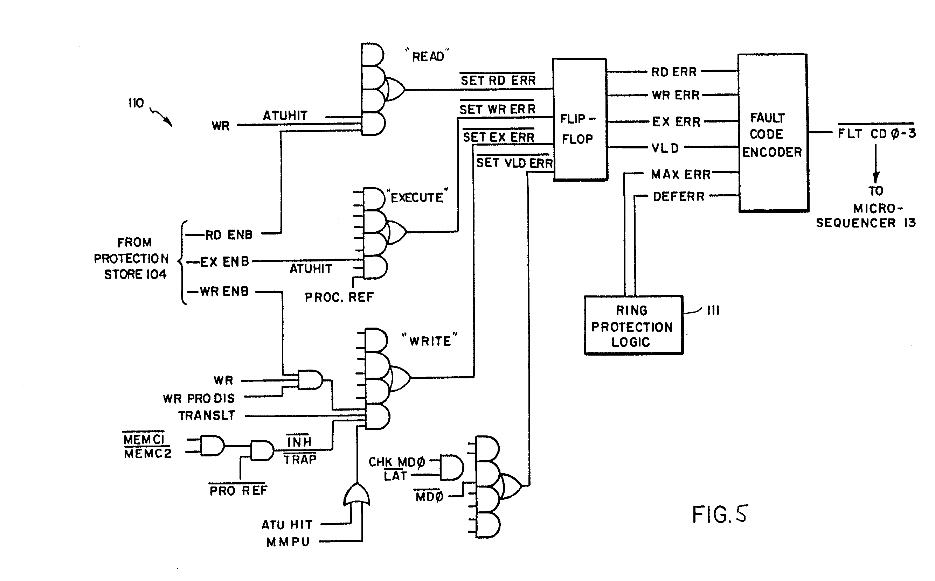

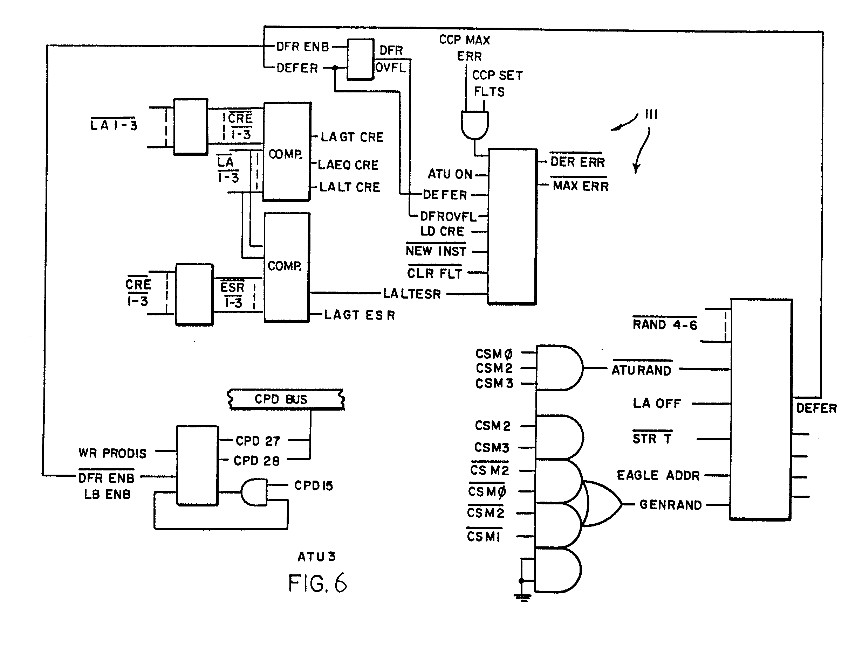

The specific logic circuitry utilized for such protection checks (i.e., the protection store 104 and the protection logic 110 and the protection logic 111 associated therewith) is shown in FIGS. 5 and 6. Thus, logic for the generation of the read error, write error, execution error and validity error signals is shown in FIG. 5 and logic for generating the defer error and ring maximization error signals being shown in FIG. 6.

With respect to the protection system, since logical address space is partitioned into eight hierarchical regions (i.e. the "rings" or "segments") the partitioning can be delineated by the segment field of the logical address. Thus, segment number 0 is always assigned to ring 0 (ring 0 being the ring in which only priviledged instructions can be executed), segment 1 is always assigned to ring 1, and so forth. Such approach differs from previous systems using a segmented hierarchical address space in that the ring number is not independent of the logical address space. In contrast, in the system discussed here, each ring is directly bound in the space so that segment 0 is always allocated to ring 0, segment 1 to ring 1, and so forth.

The access field in a page table entry comprises three bits (MD 2-4) is shown in FIG. 4 and indicates the capabilities of the referenced data item in the logical address space, i.e. as to whether the reference data item is to be a read access, a write access, or an execute access, the protection store 104 responding to such bits to produce either a read enable signal

($\overline{\text{RD ENB}}$), or a write enable ($\overline{\text{WR ENB}}$) or an execute enable ($\overline{\text{EX ENB}}$). The ring protection governs the proper interpretation of the access privileges of the user to a particular ring, a user being permitted access only to selected, consecutively numbered rings. Thus, access can only be made to a bracket of rings (an access bracket) if the effective source for such reference is within the appropriate access bracket. For example, the read bracket of a data reference in any ring is the ring number. That is, a data address reference to segment 5 (ring 5), for example, can never legitimately originate from an effective source which is greater than 5. In other words an effective source in segment 5 can never reference a ring lower than ring 5 and, therefore, if a reference from an effective source greater than 5 attempts to access ring 5 a ring maximum error (MAX ERR) will be signaled as shown by the logic in FIG. 5. A table showing such ring protection operation is shown below:

| Effective Source Space \ Target Space | RING 0 | RING 1 | Ring 2 ... | RING 7 |
|---|---|---|---|---|
| RING 0 | Val-RO | Val-Rl | Val-R2 ... | Val-R7 |
| RING 1 | Fault | Val-Rl | Val-R2 ... | Val-R7 |
| RING 2 | Fault | Fault | Val-R2 ... | Val-R7 |
| . | . | . | . | . |
| . | . | . | . | . |
| . | . | . | . | . |
| RING 7 | Fault | Fault | Fault ... | Val-R7 |

In summary, in order to make a ring access. the ring maximization function is used to determine whether or not the reference is a valid ring reference and, if it is, the page table entry that references the address datum is examined to see if the page is a valid one. Then, if the read protection bit indicates that such valid page can be read, the read can be performed. If any one of the examinations shows a protection error (i.e., ring maximization error, validity error, or read error) the read is aborted and an appropriate fault code routine is called. Similarly, appropriate examination for protection errors for write access and execute access situations can also be performed.

In an hierachical address space such as discussed above, it is desirable to mediate and authenticate any attempt to switch rings, i.e., to obtain access to a ring (segment) other than the ring which is currently being used (a "ring crossing" operation). The performing of a ring crossing operation is authenticated as follows.

Any ring crossing attempts occur only as a result of an explicit attempt to do so by a program control instruction, and such explicit attempt can occur only if the following conditions are satisfied.

(1) The program control instruction is of the form of a subroutine "call", i.e., where access is desired to a subroutine in another ring (LCALL – see Appendix B), or a subroutine "return", i.e., where a subroutine in another ring has been accessed and it is desired to return to the original ring (WRTN and WPOPB – see Appendix B). All other program control instructions (e.g., JUMP) ignore the ring field of the effective address required for the instruction and such instructions can only transfer to locations within the correct segment.

(2)   The direction of a subroutine call crossing must be to a lower ring number (i.e., inwardly toward ring 0) wherein the lower ring has a higher order of protection and the current ring of execution and the direction of a subroutine return crossing must be to a higher ring number (i.e., outwardly away from ring 0) wherein the higher ring has a lower order of protection than the called ring containing the subroutine.  Outward calls and inward returns are trapped as protection faults.

(3)   The target segment of the effective branch address is not in the segment identified by bits 1-3 of the program counter.

In the above conditions are met the return address for outward returns is merely interpreted as a normal word address. However, if the above conditions are met for an inward call, the branch address is interpreted as follows:

| 0 | 1   3 | 4            15 | 16            31 |
|---|-------|-----------------|------------------|
| X | SBR   | NOT USED        | GATE NUMBER      |

Inward Call Branch Address

Bits 16-31 are interpreted as a "gate" into the specified segment (SBR of bits 1-3) in the target space.  The gate number is used to verify that the specified gate is in the called segment and, upon verification, to associate on instruction address with the specified gate via a "gate array" in the called segment, as discussed below.

The location of the gate array in any called segment is indicated by a pointer contained in particular locations of the called segment (e.g., in a particular embodiment the pointer locations may be specified as locations 34 and 35 in each segment.  The structure of the gate array is as follows:

```
0                          15 16                        31
┌─────────────────────────┬───────────────────────────┐
│       NOT USED          │   MAX. NO. OF GATES        │
├───┬─────────────────────┼───────────────────────────┤
│   │ GATE                │                            │
│ X │ BRACKET             │    P C OFFSET              │ GATE 0
│   │                     │                            │
├───┴─────────────────────┴───────────────────────────┤
│  .                                              .    │
│  .                                              .    │
│  .                                              .    │
├───┬─────────────────────┬───────────────────────────┤ GATE
│ X │ GATE                │    P C OFFSET              │ (MAX-1)
│   │ BRACKET             │                            │
└───┴─────────────────────┴───────────────────────────┘
0             3 4                                    31
```

Gate Array

The gate number of the pointer which referenced the target segment is compared with bits 16-31 of the first 32 bits of the gate array. If the gate number is greater than or equal to the maximum number of gates in the gate array, the ring crossing call is not permitted and a protection fault occurs (if the maximum number of gates is 0, the segment involved cannot be a valid target of an inward ring crossing call operation).

If the gate number is less than the maximum number of gates, the gate number is then used to index into one of the gates of the gate array which follows the first 32 bits thereof. The contents of the indexed gate are read and are used to control two actions. First, the effective source is compared to the gate bracket bits 1-3 of the indexed gate. The effective source must be less than or equal to the referenced gate bits and, if so, the PC offset bits 4-31 become the least significant 28 bits of the program counter and bits 1-3 of the program counter are set to the segment containing the gate array.

If the gate in a ring crossing operation, as described above, is a permitted entry point to the ring to which the crossing is made, a new stack is constructed. In order to do so a stack switching operation must occur since there is only one stack per ring. Thus, before the new stack can be created, the contents of the current stack management registers must be saved at specified memory locations of the caller's ring. The callee's stack can then be created, the arguments from the caller's stack being copied onto the newly created callee's stack, the number of such arguments being specified by the X or the LCALL instruction (see Appendix B). An appropriate check is first made to determine whether copying of all of the arguments would created a stack overflow condition. If so, a stack fault is signalled, the ring crossing being permitted and the fault being processed in the called ring.

In order to emulate operation of ECLIPSE address translation operations appropriate emulation control signals for placing the ATU in the ECLIPSE operating mode are required as shown by emulation control logic unit 115 which, in response to coded instructions generated by the microsequencer board 13 produces such signals to permit operation for 16-bit addresses equivalent to the memory management protection unit (MMPU) of ECLIPSE comparators as described in the aforesaid publications thereon.

UNIQUE MACRO-INSTRUCTIONS

In accordance with the unique extended processor system of the invention, as described above, certain operations are performed by the system which operations are in themselves uniquely indigenous to the overall operating capabilities of the system. Such operations are described in more detail below and can be best understood in conjunction with the system instruction set reproduced in Appendix B.

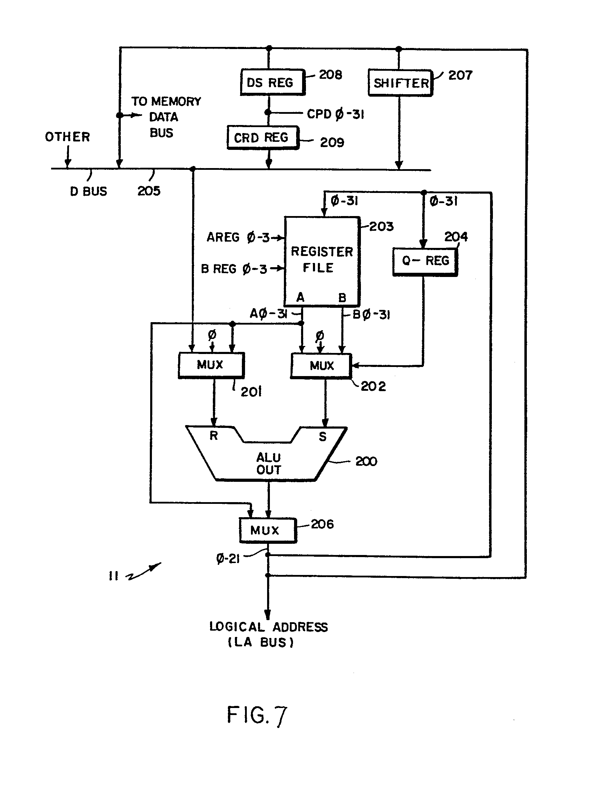

The first operation to be considered involves an interruption of a currently executing program by a peripheral device, for example, and the need to transfer control of the system to the appropriate interrupt operating sequence. One such unique interruption operation is related to the instruction designated as "EAGLE Vector on Interrupting Device" (having the abbreviated mnemonic description XVCT) in Appendix B (the instructions in the instruction set of Appendix B are listed in alphabetical order in accordance with their abbreviated mnemonic designations). An understanding of the XVCT interrupt operation can be obtained with the help of the diagrammatic representation of the memory locations shown in FIG.7.

Interrupt requests are examined and identified in between the decoding of macroinstructions of a currently executing program and, if an interrupt request occurs, the contents of the stack registers for the current program are first saved in selected locations provided for such purpose in the current ring of execution (e.g. selected locations in Page 0 of the current ring).

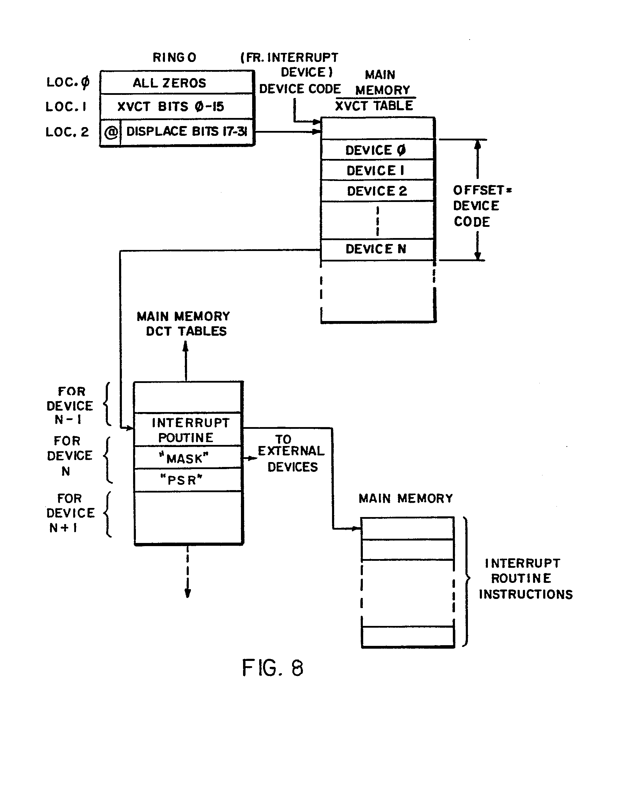

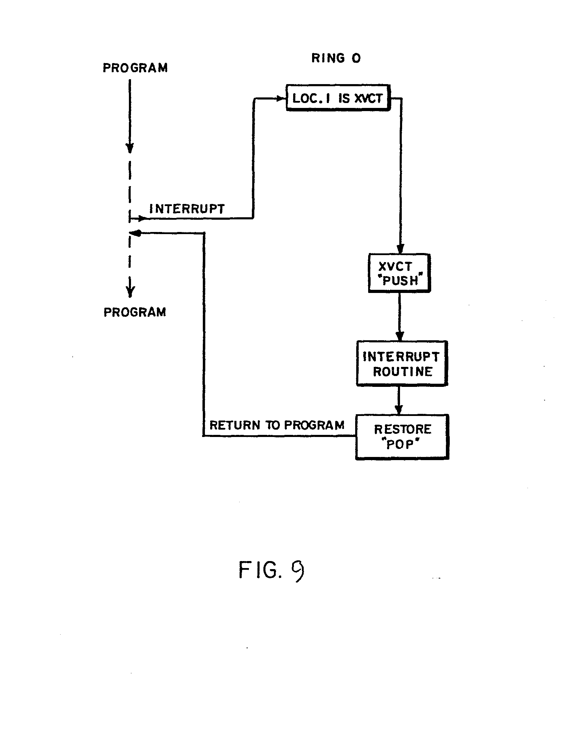

Since ring 0 is the ring reserved for special operations, e.g., interrupt operations, the systems must then cross to ring 0 (change the CRE bits 1-3 of the SBA's to identify ring 0) and load the now empty stack registers with the contents, relating to interrupt procedures, of selected locations in ring 0. Further, a selected location of ring 0, e.g., location 0, for example, is examined to determine if the interrupt is a "base level" interrupt, i.e., an interrupt condition in which no other prior interrupts are being processed, or as a "higher level" interrupt in which one or more other interrupts are already pending. If pending location 0 indicates that the interrupt is a base level interrupt (e.g., location 0 is a "zero"), as seen, for example, in FIG. 7 then the interrupt code examines a selected location (e.g., location 1) of ring 0 to determine if such location contains the XVCT code (the first 16 bits of such location 1 corresponds to the first 16 bits of the XVCT code specified in Appendix B). If the interrupt is an XVCT interrupt, the stack registers are then loaded with the XVCT information to set up a XVCT stack, i.e., an XVCT stack "PUSH" as seen in FIG. 8.

The displacement bits 17-31 of location 1 (corresponding to the displacement bits 17-31 of the XVCT instruction shown in Appendix B) then represent an address which points to a selected location in a preloaded XVCT table in the main memory (see FIG. 7. The "device code" information (a 16 bit offset code unique to each I/O device from which an interrupt request can be received) is received from the particular device which has requested the interrupt and offsets to a selected address which points to a particular device control table (DCT) in main memory associated with that particular device (e.g., DCT associated with device N identified in XVCT table). The device control table contains the address which points to macroinstructions in main memory which are required in order to perform the interrupt routine requested by the interrupting device.

The DCT also contains a coded word ("MASK") which identifies which other device can be "masked out" (i.e., prevented from performing an interrupt while the interrupt is pending for the particular device in question). Certain other devices which have higher interrupt priority than the device in question will not be so masked.

The DCT further defines the state of the system by a PSR (processor status register) word which is loaded into the PSR of the system and determines whether or not a fixed point overflow condition is to be enabled.

Once the macroinstructions for the particular interrupt routine requested by the particular device in question have been performed, the previously stored contents of the system stack registers relating to the program currently being executed by the system prior to the interrupt are restored to the system stack registers and such program continues its execution. The overall operation is shown diagrammatically in FIG. 8.

Another operation unique to the system described herein involves the loading of the segment base registers (SBR) of the system and related to the LSBRA instruction described in the instruction set of Appendix B. As explained above, the SBR's of the systems are not located in main memory but are more readily available on the ATU board of the system. The eight segment base registers of the system each contain a double word of a block of eight double words. The operation described here relates to the loading of such SBR's with an eight double-word block from memory, the starting address of which is contained in a selected accumulator of the system (e.g., AC∅). The LSBRA operation then loads such block into the SBR's in the manner shown by the table designated in connection with the LSBRA instruction in Appendix B.

## APPENDIX A

| DATA GENERAL CORPORATION<br>MANUAL NO | TITLE |
|---|---|
| 015-000 009 | HOW TO USE THE NOVA COMPUTER |
| 014-000 092 | ECLIPSE M/600 PRINCIPLES OF OPERATION |
| 014-000 629 | INTERFACE DESIGN'S REFERENCE<br>NOVA AND ECLIPSE LINE COMPUTERS |
| 014-000 617 | PROGRAMMER's REFERENCE NOVA 4 |
| 014-000 648 | ECLIPSE MV/8000 PRINCIPLES OF<br>OPERATION |

APPENDIX B

Jump

JMP

| O | O | O | O | O | @ | INDEX | DISPLACEMENT |

0  1  2  3  4  5  6  7  8                15

Computes the effective address, E, and places it in the program counter. Sequential operation continues with the word addressed by the updated value of the program counter.

The 32-bit effective address generated by this instruction is constrained to be within the first 32 Kword of the current segment.

Carry remains unchanged and overflow is O.

Jump to Subroutine

JSR (@) displacement (,index)

| O | O | O | O | 1 | @ | INDEX | DISPLACEMENT |

0  1  2  3  4  5  6  7  8                15

Increments and stores the value of the program counter in AC3, and then places a new address in the program counter.

Computes the effective address, E; then places the address of the next sequential instruction in bits 16-31 of AC3. Places E in the program counter. Sequential operation continues with the word addressed by the updated value of the program counter.

The 32-bit effective address generated by this instruction is constrained to be within the first 32 Kword of the current segment.

Carry remains unchanged and overflow is O.

NOTE: The instruction computes E before it places the incremented program counter in AC3.

Call Subroutine (Long Displacement)

LCALL   opcode, argument count, displacement

| 1 | 0 | 1 | INDEX | 1 | 1 | 0 | 1 | 1 | 0 | 0 | 1 | 0 | 0 | 1 | @ | DISPLACEMENT |
|---|---|---|---|---|---|---|---|---|---|---|---|---|---|---|---|---|

0 1 2 3  4  5 6 7 8 9 10 11 12 13 14 15 16 17                                    47

| S | ARGUMENT CODE |
|---|---|

48                                                                    63

Evalates the address of a subtroutine call.

If the target address specifies an outward ring crossing, a protection fault (code = 7 in AC1) occurs.  Note that the contents of the PC in the return block are undefined.

If the target address specifies an inward ring call, then the instruction assumes the target address has the following format:

| NEW RING | UNUSED | GATE |
|---|---|---|

0 1    3 4                    15 16                                    31

The instruction checks the gate field of the above format for a legal gate.  If the specified gate is illegal, a protection (code = 6 in AC1) occurs and no subroutine call is made.  Note that the value of the PC in the return block is undefined.

If the specified gate is legal, or if the target address specifies an intra ring crossing, the instruction loads the contents of the PC, plus four, into AC3.  The contents of AC3 always references the current ring.  If bit 0 of the argument count is 0, the instruction creates a word with the following format:

| OVK | OVR | 0 | 0 | 0 | 0 | 0 | 0 | 0 | 0 | 0 | 0 | 0 | 0 | 0 | 0 | 0 | 0 | ARGUMENT COUNT |
|-----|-----|---|---|---|---|---|---|---|---|---|---|---|---|---|---|---|---|---|

0   1  2  3  4  5  6  7  8  9  10  11  12  13  14  15  16  17                31

This instruction pushes this word onto the wide stack. If a stack overflow occurs after this push, a stack fault occurs and no subroutine call is made. Note that the value of the PC in the return block is undefined. If bit 0 of the argument count is 1, then the instruction assumes the top word of the wide stack has the following format:

| DON'T CARE | 0 | ARGUMENT COUNT |
|------------|---|----------------|

0                                15 16 17              31

The instruction modifies this word to include the correct settings of OVK and OVR in bits 0 and 1.

Regardless of the setting of bit 0 of the argument count, the instruction next unconditionally sets OVR to 0 and loads the PC with the target address. Control then transfers to the word referenced by the PC.

Load All Segment Base Registers

LSBRA

| 1 | 1 | 0 | 0 | 0 | 1 | 1 | 1 | 1 | 0 | 1 | 1 | 1 | 0 | 0 | 1 |
|---|---|---|---|---|---|---|---|---|---|---|---|---|---|---|---|

0   1  2  3  4  5  6  7  8  9  10  11  12  13  14  15

Loads the SBRs with new values.

AC0 contains the starting address of an 8 double word block.

The instruction loads a copy of the contents of these words into SRBs as shown in the table below:

| Double Word in Block | Destination | Order Moved |
|---|---|---|
| 1 | SBR1 | First |
| 2 | SBR2 | Second |
| 3 | SBR3 | Third |
| 4 | SBR4 | Fourth |
| 5 | SBR5 | Fifth |
| 6 | SBR6 | Sixth |
| 7 | SBR7 | Seventh |
| 8 | SBR8 | Eighth |

After loading the SBRs, the instruction purges the ATU. If the ATU was disabled at the beginning of this instruction cycle, the processor enables it now.

If an invalid address is loaded in SBR1O, the processor disables the ATU and a protection fault occurs (code = 3 in AC1). This means that logical address are identical to physical addresses, and the fault is processed in physical address space.

The instruction leaves ACO and carry unchanged; overflow is O.

NOTE:  This is a privileged instruction.

Narrow Multiply

NMUL  acs, acd

| 1 | ACS | ACD | O | O | O | O | 1 | 1 | O | 1 | O | O | 1 |
|---|---|---|---|---|---|---|---|---|---|---|---|---|---|
| O | 1 | 2 | 3 | 4 | 5 | 6 | 7 | 8 | 9 | 10 | 11 | 12 | 13 | 14 | 15 |

Multiplies the signed integer contained in bits 16-31 of ACD by the signed integer contained in bits 16-31 of ACS. If the result is outside the range of -32,768 to +32,767 inclusive, sets overflow to 1; otherwise, overflow is O. Sign extends the lower 16 bits of the result to 32 bits and places these 32 bits in ACD. The contents of ACS and carry remain unchanged.

### Sign Extend

SEX  acs, acd

| 1 | ACS | ACD | 0 | 1 | 1 | 0 | 1 | 0 | 0 | 1 | 0 | 0 | 1 |
|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Sign extends the 16-bit integer contained in ACS to 32 bits and loads the result into ACD.  The contents of ACS remain unchanged, unless ACS and ACD are specified to be the same accumulator. Carry is unchanged and overflow is 0.

### Load PC

WBR    displacement

| 1 | DISP 0-3 | 0 | DISP 4-7 | 1 | 1 | 1 | 0 | 0 | 0 |
|---|---|---|---|---|---|---|---|---|---|
| 0 | 1 | | 4 | 5 | 6 | | 9 | 10 | 11 | 12 | 13 | 14 | 15 |

Adds the 31-bit value contained in the PC to the value of the displacement and places the results in the PC.  Carry is unchanged and overflow is 0.

NOTE:  The processor always forces the value loaded into the PC to reference a location in the current segment of execution.

### Wide Pop Block

WPOPB

| 1 | 1 | 1 | 0 | 0 | 1 | 1 | 1 | 0 | 1 | 1 | 1 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Pops six double words off the wide stack and places them in the appropriate locations.

The popped words and their destinations are as follows:

| Double Word Popped | Destination |
|---|---|
| 1 | Bit 0 to carry; bits 1-31 to PC |
| 2 | AC3 |
| 3 | AC2 |
| 4 | AC1 |
| 5 | AC0 |
| 6 | Bit 0 to OVK; bit 1 to OVR; bit 2 to IRES; bits 17-31 are multiplied by 2 and incremented by 12. This number is subtracted from WSP. WSP is loaded with the result. |

If the instruction specifies an inward ring crossing, then a protection fault occurs and the current wide stack remains unchanged. Note that the return block pushed as a result of the protection fault will contain undefined information. After the fault return block is pushed, AC0 contains the contents of the PC (which point to the instruction that caused the fault) and AC1 contains the code 8.

If the instruction specifies an intra-ring address, it pops the six double word block, then checks for stack underflow. If underflow has occurred, a stack underflow fault occurs. Note that the return block pushed as a result of the stack underflow will contain undefined information. After the fault return block is pushed, AC0 contains the contents of the PC (which point to the instruction that caused the fault) and AC1 contains the code 3. If there is no underflow, execution continues with the location addressed by the program counter.

If the instruction specifies an outward crossing, it pops the six double word return block and checks for stack underflow. If underflow has occurred, a stack underflow fault occurs. Note that the return block pushed as a result of the stack underflow will contain undefined information. After the fault return block is pushed, AC0 contains the contents of the PC (which point to the instruction that caused the fault) and AC1 contains the code 3. If there is no underflow, the instruction stores WSP and
WFP in the appropriate page zero locations of the current
segment. It then performs the outward ring crossing and loads the
wide stack registers with the contents of the appropriate page
zero locations of the new ring. Loads WSP with the value:

(current contents of WSP) - (2 x (argument count)) Checks for stack underflow. If underflow has occurred, a stack
underflow fault occurs. Note that the return block pushed as a
results of the stack underflow will contain undefined information.
After the fault return block is pushed, ACO contains the contents
of the PC (which point to the instruction that caused the fault)
and AC1 contains the code 3. If there is no underflow, execution
continues with the location addressed by the program counter.

Wide Return
WRTN

| 1 | 0 | 0 | 0 | 0 | 1 | 1 | 1 | 1 | 0 | 1 | 0 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Returns control from subroutines that issue a WSAVS or a WSAVR
instruction at their entry point. Places the contents of WFP in
WSP and executes a WPOPB instruction. Places the popped value of
AC3 in WFP.

Call Subroutine (Extended Displacement)
XCALL    opcode, argument count, displacement

| 1 | 0 | 0 | INDEX | 1 | 1 | 0 | 0 | 0 | 0 | 0 | 1 | 0 | 0 | 1 | @ | DISPLACEMENT | S | ARGUMENT COUNT |
|---|---|---|---|---|---|---|---|---|---|---|---|---|---|---|---|---|---|---|

0 1 2 3   4 5 6 7 8 9 10 11 12 13 14 15 16 17          31 32 33              47

Evalues the address of a subroutine call.

If the target address specifies an outward ring crossing,
a protection fault (code = 7 in AC1) occurs. Note that the contents
of the PC in the return block are undefined.

If the target address specifies an inward ring call, then the instruction assumes the target address has the following format:

| NEW RING | UNUSED | GATE |
|---|---|---|
| 0 1　　3 | 4　　　　　　　15 | 16　　　　　　　31 |

The instruction checks the gate field of the above format for a legal gate. If the specified gate is illegal, a protection fault (code = 6 in AC1) occurs and call is made. Note that the contents of the PC in the return block are undefined.

If the specified gate is legal, or if the target address specifies an intra-ring crossing, then the instruction loads the contents of the PC, + 3, into AC3. The contents of AC3 will always references the current segment. If bit 0 of the argument count is 0, then the instruction creates a word with the following format:

| OVK | OVR | RES | 0 | 0 | 0 | 0 | 0 | 0 | 0 | 0 | 0 | 0 | 0 | 0 | 0 | 0 | ARGUMENT COUNT |
|---|---|---|---|---|---|---|---|---|---|---|---|---|---|---|---|---|---|
| 0 | | | | | | | | | | | | | | | | | 31 |

The instruction pushes this word onto the wide stack. If a stack overflow occurs after this push, a stack fault occurs and no call is made. Note that the value of the PC in the return block is undefined. If bit 0 of the argument count is 1, then the instruction assumes the top word of the wide stack has the following format:

| DON'T CARE | 0 | ARGUMENT COUNT |
|---|---|---|
| 0　　　　　　15 | 16 | 17　　　　　　31 |

The instruction modifies this word to include the correct settings of OVK and OVR in bits 0 and 1.

Regardless of the setting of the argument count's bit 0, the instruction next unconditionally sets OVR to 0 and loads the PC with target address. Execution continues with the word references by the PC.

- 44 -

Zero Extend

ZEX  acs, acd

| 1 | ACS | ACD | 0 | 1 | 1 | 0 | 1 | 0 | 1 | 1 | 0 | 0 | 1 |
|---|-----|-----|---|---|---|---|---|---|---|---|---|---|---|
| 0 | 1 2 | 3 4 | 5 | 6 | 7 | 8 | 9 | 10 | 11 | 12 | 13 | 14 | 15 |

Zero extends the 16-bit integer contained in ACS to 32 bits and loads the result into the ACD.  The contents of ACS remain unchanged, unless ACS equals ACD. Carry is unchanged and overflow is 0.

CLAIMS

1. A data processing system capable of use with one or more external devices, characterised by memory means (15) including a first storage region (16; INTERRUPT ROUTINE INSTR Fig 7) containing a plurality of instruction routines, each routine for performing one of a plurality of selectable interrupt operations; a second storage region (DCT TABLES) containing a plurality of device control tables, each said table being associated with one of the external devices and including an interrupt routine address pointing to a selected one of the interrupt routines in the first storage region; a third storage region (XVCT TABLE) containing a plurality of device control table addresses, each of these addresses being associated with one of the external devices and pointing to a selected one of the device control tables in the second storage region; means responsive to an interrupt request (DEVICE CODE) from an external device for supplying an address pointing to a selected location in the third storage region when the interrupt requested by the external device is an interrupt which requires transfer of control of the data processing system to a selected one of the interrupt routines in said first storage region; and means (RING 0) responsive to coded information from the external device requesting the interrupt for providing an address offset from the selected location in the third storage region, the address at the offset location being the address pointing to the selected one of the device control tables in the second storage region.

2. A data processing system in accordance with claim 1, characterised in that the device control table (DCT TABLES) in the second storage region includes coded masking information ("MASK") for preventing other external devices from requesting interrupts when an interrupt has already been requested by the external device.

FIG. I

1/9

0150521

FIG. 2

LOGICAL WORD ADDRESS

| 1 | 3 4 | 12 13 | 21 22 | 31 |
|---|---|---|---|---|
| SBR | 2 LEVEL PAGE TABLE | 1 LEVEL PAGE TABLE | PAGE OFFSET | |

SPECIFIES AN SBR WITH THE FORMAT ①

| 0 | 1 | 2 | 12 | 13 | 31 |
|---|---|---|---|---|---|
| 1 | 1 | | | PHYSICAL ADDRESS | |

| 3 | ② 21 | 22 | 30 | 31 |
|---|---|---|---|---|
| PHYSICAL ADDRESS | 2 LEVEL PAGE TABLE | | 0 | |

SPECIFIES A PAGE TABLE

STARTING→ WORD ADDRESS

| PTE 0 |
|---|
| PTE 1 |
| PTE 2 |
| ⋮ |
| PTE n |
| ⋮ |
| PTE 511 |

0          31

③

SPECIFIES A PARTICULAR PTE IN THE SPECIFIED PAGE TABLE

PTEn FORMAT

| 0 | 1 | 12 | 13 | 31 |
|---|---|---|---|---|
| 1 | 1 | | VALID RESIDENT PHYSICAL ADDRESS | |

| 3 | ④ 21 | 22 | 30 | 31 |
|---|---|---|---|---|
| PHYSICAL ADDRESS | 1 LEVEL PAGE TABLE | | 0 | |

PAGE TABLE

| PTE 0 |
|---|
| PTE 1 |
| ⋮ |
| PTE m |
| ⋮ |
| PTE 511 |

0          31

⑤ SPECIFIES STARTING WORD ADDRESS OF A PAGE TABLE

SPECIFIES THE OFFSET TO THE PT STARTING ADDRESS TO CHOOSE A PARTICULAR PTE

| 0 | 1 | 2 | 12 | 13 | 31 |
|---|---|---|---|---|---|
| 1 | 1 | | | PHYSICAL ADDRESS | |

FORMAT OF PTEm

⑥

| 3 | 21 | 22 | 31 |
|---|---|---|---|
| PHYSICAL ADDRESS | PAGE OFFSET | | |

FINAL PHYSICAL WORD ADDRESS

FIG. 3

FIG. 4

LOGICAL ADDRESS BUS (LA Ø-31)

26

$\overline{MD\ 2-4}$ · LAI5-21 $\overline{LA22-31}$

104 — PROTECTION STORE

TRAP LOGIC — TRAP LOGIC SIGNALS

LA 0-31

101 — LOGICAL ADDRESS REG

TRANSLATION PURGE LOGIC

MUX

$\overline{MD\ 18-31}$ $\overline{\dfrac{LA}{15-21}}$

ATU TRANSLATION STORE

$\overline{LAR\ 2-14}$ $\overline{\dfrac{LA}{15-21}}$

102 — TAG STORE

110

PROTECTION LOGIC → FLT CD Ø-3

$\overline{MAX\ ERR}$ $\overline{DEF\ ERR}$ $\overline{VLDERR}$

111 — RING PROT. LOGIC

$\overline{LAR\ 4-12}$ $\overline{LAR\ 13-21}$ $\overline{LAR\ 2-14}$

109

LA 15-21 $\overline{SELCNT}$

VALIDITY STORE → $\overline{VLD}$

103

108

$\overline{LA8-21}$

PHYS. MODE BUFFER

100

$\overline{\dfrac{PHY}{8-21}}$

107 $\overline{MD\ 18-31}$

PAGE TABLE ADDR MUX

$\overline{LA18-31}$

SET LAERR

TAG 2-14

105

COMP.

ATU HIT

FROM MICRO SEQUENCER

115 — 16-BIT MMPU EMULATION CONTROL LOGIC

CPD 15,27,28

LA 1-3 CRE 1-3

OFFSET MUX

$\overline{LAR\ 0-31}$

$\overline{PHY\ 22-31}$

$\overline{PHY\ 8-21}$

116 — LAST BLOCK REG ← EPD 5-14 ← H12B (FOR MMPU EMULATION)

EMULATION CONTROL SIGNALS

$\overline{RDENB}$ $\overline{EXENB}$ $\overline{WRENB}$

$\overline{TAG\ 2-14}$ $\overline{VLD}$

ATU HIT

$\overline{PHY\ 8-21}$

TRANS. REG.

$\overline{LAR\ Ø-31}$

112 — DRIVERS

LAR CPD DRIVER

OTHER INTERNAL STATE SIGNALS

STATE SIGNALS

REF/MOD. STORAGE & CONTROL

25

CPD 28-31

$\overline{CPD\ Ø-31}$

CPD Ø,3-6,8-10,13 16-19,23,26-30

CPD BUS

PHY. ADDR BUS DRIVERS $\overline{C\ PORT\ A8-31}$ (TO MEMORY)

CPM BUS 20

$\overline{CPM\ Ø-4,18-31}$

MEMORY DATA REG.

105

CPD 3,4,18-31

LMP DATA REG.

TO OTHER UNITS

PA BUS 27

$\overline{MD\ 3,4,18-31}$

$\overline{MD\ Ø-4,18-31}$ (TO TRANS./PROT. STORES)

INTERNAL MEMORY DATA BUS

ATU FIG. 4

419

0150521

FIG. 5

FLT CD Ø-3 → TO MICRO-SEQUENCER 13

FAULT CODE ENCODER

RD ERR
WR ERR
EX ERR
VLD
MAX ERR
DEFERR

RING PROTECTION LOGIC  111

FLIP-FLOP

SET RD ERR
SET WR ERR
SET EX ERR
SET VLD ERR

"READ"
"EXECUTE"
"WRITE"

CHK MDØ / LAT
MDØ

WR
ATUHIT

RD ENB
EX ENB
WR ENB
ATUHIT
PROC. REF

WR
WR PRO DIS
TRANSLT
INH
TRAP
PRO REF
ATU HIT
MMPU

MEMC1
MEMC2

FROM PROTECTION STORE 104

110

ATU 3

FIG. 6

0150521

FIG. 7

0150521

8/9

FIG. 8

PROGRAM

RING O

LOC.I IS XVCT

INTERRUPT

PROGRAM

XVCT "PUSH"

INTERRUPT ROUTINE

RETURN TO PROGRAM

RESTORE "POP"

FIG. 9